Europäisches Patentamt

European Patent Office

Office européen des brevets

(19)

(11) Veröffentlichungsnummer: **0 307 385**
**B1**

(12) **EUROPÄISCHE PATENTSCHRIFT**

(45) Veröffentlichungstag der Patentschrift:
26.09.90

(51) Int. Cl.⁵: **F16B 37/04**

(21) Anmeldenummer: 88890175.8

(22) Anmeldetag: 05.07.88

(54) Blindnietverbindung für Muttern oder Gewindebolzen.

(30) Priorität: 07.09.87 AT 2253/87

(43) Veröffentlichungstag der Anmeldung:
15.03.89 Patentblatt 89/11

(45) Bekanntmachung des Hinweises auf die Patenterteilung:
26.09.90 Patentblatt 90/39

(84) Benannte Vertragsstaaten:
BE CH DE FR GB IT LI NL SE

(56) Entgegenhaltungen:
DE-A- 2 021 919
DE-A- 2 353 913
DE-A- 3 019 070
DE-A- 3 132 599

(73) Patentinhaber: Austria Metall Aktiengesellschaft,
A-5282 Braunau am Inn(AT)

(72) Erfinder: Garnweidner, Peter, Otto v.Lilientalstrasse 32,
A-5020 Salzburg(AT)

(74) Vertreter: Hain, Leonhard, Dipl.-Ing., Tal 18/IV,
D-8000 München 2(DE)

ACTORUM AG

## Beschreibung

Die Erfindung betrifft eine Blindnietverbindung für Muttern oder Gewindebolzen gemäß dem Oberbegriff des Patentanspruches 1.

Herkömmliche Blindnietverbindungen für Muttern oder Gewindebolzen sind lediglich durch ihren Kraftschluß mit dem Grundkörper gegen Drehung gesichert. Werden zum Lösen der Schraubverbindung hohe Torsionsmomente angewendet, dann dreht die Niete im Grundkörper durch, erschwert das Lösen der Verbindung und macht sie für eine weitere Verwendung unbrauchbar. Aufwendige und kostspielige Zusatzarbeiten sind die Folge. Eine gewisse Sicherung gegen Drehung läßt sich noch durch Verkleben der Nietverbindung oder durch Verwendung von teuren Sechskantnieten erreichen. Bei sogenannten Einbaumuttern, selbstverankernden Muttern oder Mutterbefestigungen an Platten ist es bekannt, die Muttern an ihrer Anschlagfläche mit Nuten zu versehen, in die dann das Plattenmaterial hineingedrückt wird. Dadurch werden diese Muttern nicht nur gegen Drehung gesichert, sondern vor allem auf der Grundplatte verankert (z.B. DE A 2 021 919; DE A 2 353 913). Diese Befestigungsart setzt jedoch eine Verformung der Grundplatte voraus. Außerdem muß die Grundplatte zum Ansetzen eines Werkzeuges beiderseits zugänglich sein. Diese Art der Drehsicherung ist schon deshalb nicht für Blindnietverbindungen brauchbar.

Der Erfindung liegt daher die Aufgabe zugrunde, eine Blindnietverbindung für Muttern oder Gewindebolzen vorzuschlagen, die einen gegen Drehung gesicherten Sitz von Blindniet-Muttern und -Gewindebolzen gewährleistet.

Diese Aufgabe wird an einer Blindnietverbindung gemäß dem Oberbegriff des Patentanspruches 1 durch die Kennzeichnungsmerkmale dieses Patentanspruches gelöst.

Vorteilhafte Weiterentwicklungen dieser Erfindung sind in Unteransprüchen erwähnt.

Durch eine im Stauchbereich der Nietverbindung vorgesehene Oberflächenprofilierung am Grundkörper des zu verbindenden Teiles wird ein Drehen der Mutter oder des Gewindebolzens ausgeschlossen. Der Kopf der Niete erfährt bei seiner Stauchung eine zu seiner Längsachse exzentrische Deformation und wird infolge eines sich ergebenden Formschlusses mit der Oberflächenprofilierung am Drehen gehindert. Eine Oberflächenprofilierung in Form oder zweier Leisten hat sich als besonders günstig erwiesen. Werden die beiden Leisten noch symmetrisch zur Nietbohrung angeordnet, dann wird auch die Niete symmetrisch deformiert und es kann kein Verzug zwischen Bohrungsachse und Nietachse auftreten.

Die so gesicherten Muttern oder Bolzen werden exakt die vorbestimmte Lage einnehmen und die Einbautoleranzen können klein gehalten werden.

Je nach Verhältnis des Leistenabstandes zum Bohrungsdurchmesser kann die Drehbefestigung im Grundkörper verändert werden. Eine besonders hohe Drehbefestigung wird durch ein Verhältnis von 1,1555 des Bohrungsdurchmessers zum Abstand der beiden der Nietlochbohrung zugewandten Seiten der Leisten bewirkt. Dieses Verhältnis kann auch zwischen dem 1,1- bis 1,2-fachen des Nietlochdurchmessers liegen.

Durch die erfindungsgemäße Lösung wird eine große Sicherheit gegen Drehung von Blindniet-Muttern oder -Gewindebolzen erreicht. Die Schraubverbindungen sind ohne Gefahr einer Zerstörung der Nietverbindung wieder lösbar. Da nur einfache Bohrlöcher für die Niete benötigt werden, ist diese Verbindungsart kostengünstig herzustellen. Falls eine kleine Konzentrizitäts- oder Winkeltoleranz in Kauf genommen werden Kann, kann zur Erhöhung dieser Drehsicherung im Bohrloch eine Kerbe vorgesehen werden.

Die Erfindung wird nachfolgend anhand von Ausführungsbeispielen, die auch in der Zeichnung schematisiert dargestellt sind, näher beschrieben. Es zeigen:

Fig. 1 eine Blindnietverbindung mit einer Gewindemutter, im Schnitt längs der Linie I-I der Fig. 2,
Fig. 2 eine Draufsicht auf diese Blindnietverbindung,

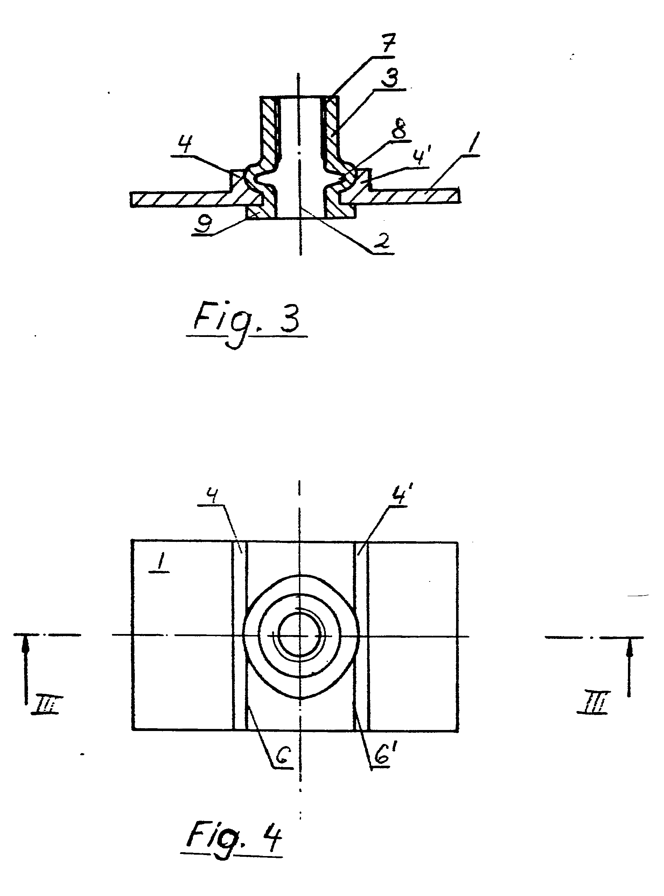

Fig. 3 eine weitere Blindnietverbindung im Schnitt nach der Linie III-III der Fig. 4 und
Fig. 4 eine Draufsicht zur Fig. 3.

Der Grundkörper 1 weist eine Nietlochbohrung 2 auf, durch die die Blindnietmutter 3 eingepreßt ist. Durch die beiden seitlichen Leisten 4 und 4' wird die Nietverbindung am Drehen gehindert. Die beiden Leisten 4 und 4' liegen im Stauchbereich 5 der Blindnietmutter. Die der Nietlochbohrung zugewandten Seiten 6, 6' der Leiste können sowohl parallel zur Nietlochachse als auch zu ihr gekrümmt ausgeführt sein. Unterhalb des Gewindes 7 ist ein geschwächter Wandbereich 8 vorhanden, der zur Deformationssteuerung beim Einpressen der Nietverbindung dient. Der Nietkopf 9 ist der Anschlag der Nietmutter zum Positionieren und wird als Widerlager zur Verformung des geschwächten Wandbereiches 8 benützt.

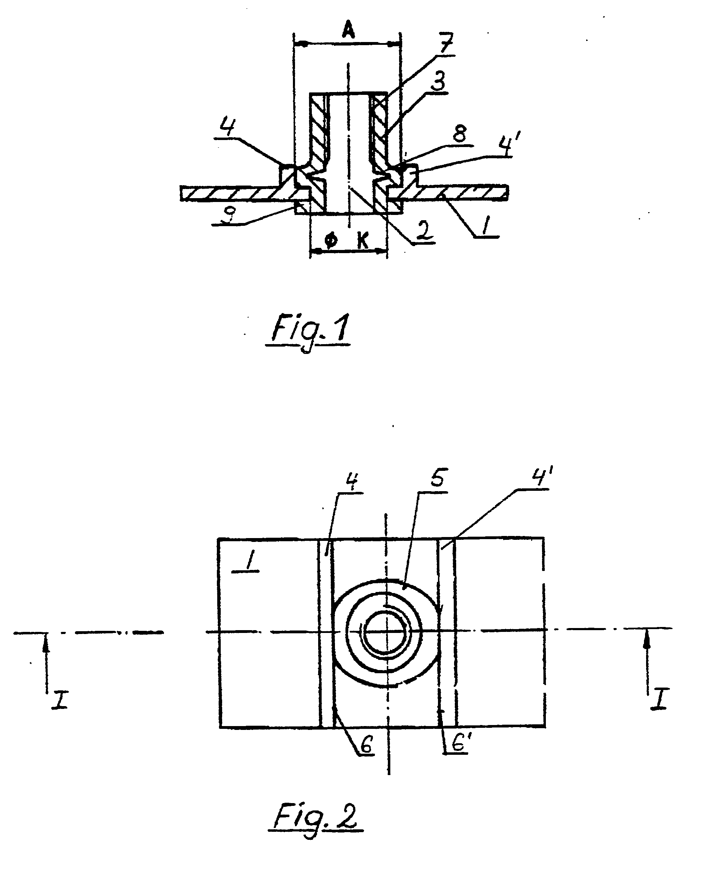

Durch Veränderung des Durchmessers K (Fig. 1) der Nietlochbohrung 2 zum Abstand A der Seiten 6, 6' kann die Drehfestigkeit im Grundkörper 1 verändert werden.

## Patentansprüche

1. Blindnietverbindung für Muttern oder Gewindebolzen, wobei das Verbindungselement in Form einer Hohlniete ausgebildet und mit einem Grundkörper (1) durch Blindnieten verbunden ist, dadurch gekennzeichnet, daß am Grundkörper (1) im Stauchbereich der Niete (3) mindestens eine Leiste (4 bzw. 4') vorgesehen ist, die den beim Stauchen der Niete sich bildenden Stauchwulst (8) im tangierten Abschnitt seines Umfanges einengt.

2. Blindnietverbindung nach Anspruch 1, dadurch gekennzeichnet, daß die den Stauchwulst (8) verformende Innenseite (6 bzw. 6') der Leiste (4 bzw. 4') parallel zur Nietlochachse verläuft.

3. Blindnietverbindung nach Anspruch 1, dadurch gekennzeichnet, daß die den Stauchwulst (8) verformende Innenseite (6 bzw. 6') der Leiste (4 bzw. 4') in Vertikalrichtung gekrümmt ist.

4. Blindnietverbindung nach einem der Ansprüche 1 bis 3, dadurch gekennzeichnet, daß zwei parallele Leisten (4, 4') symmetrisch zum Nietloch (2) angeordnet sind.

5. Blindnietverbindung nach einem der Ansprüohe 1 bis 4, dadurch gekennzeichnet, daß der Fuß-Abstand zwischen den Innenseiten (6, 6') der Leisten (4, 4') daß 1,1– bis 1,2-fache des Durchmessers des Nietloches (2) beträgt.

## Claims

1. A blind rivet connection for nuts or screw-threaded bolts, wherein the connecting element is in the form of a hollow rivet and is connected to a main body (1) by blind riveting, characterised in that provided on the main body (1) in the upset region of the rivet (3) is at least one bar portion (4 or 4') which constricts the upsetting bulge (8) which is formed in the operation of upsetting the rivet, in the portion of the circumference of the bulge where it touches the bar portion.

2. A blind rivet connection according to claim 1 characterised in that the inward side (6 or 6') of the bar portion (4 or 4'), which deforms the upsetting bulge (8), extends parallel to the axis of the rivet hole.

3. A blind rivet connection according to claim 1 characterised in that the inward side (6 or 6') of the bar portion (4 or 4'), which deforms the upsetting bulge (8), is curved in a vertical direction.

4. A blind rivet connection according to one of claims 1 to 3 characterised in that two parallel bar portions (4, 4') are arranged symmetrically with respect to the rivet hole (2).

5. A blind rivet connection according to one of claims 1 to 4 characterised in that the spacing at the bases between the inward sides (6, 6') of the bar portions (4, 4') is 1.1 to 1.2 times the diameter of the rivet hole (2).

## Revendications

1. Liaison par rivetage borgne ou aveugle pour écrous ou tiges filetées, l'élément de liaison se présentant sous forme d'un rivet creux et étant relié à la pièce (1) de base par rivetage borgne, liaison caractérisée en ce qu'au moins une nervure (4 ou 4') est prévue sur la pièce (1) de base dans la zone de refoulement du rivet (3), laquelle nervure réduit, dans la partie tangente de sa périphérie, la largeur du bourrelet (8) de refoulement qui se forme lors du refoulement du rivet.

2. Liaison par rivetage borgne selon la revendication 1, caractérisée en ce que le côté intérieur (6 ou 6') de la nervure (4 ou 4'), qui façonne le bourrelet (8) de refoulêment, s'étend parallèlement à l'axe du trou de rivetage.

3. Liaison par rivetage borgne selon la revendication 1, caractérisée en ce que le côté intérieur (6 ou 6') de la nervure (4 ou 4'), qui façonne le bourrelet (8) de refoulement, est incurvé ou incliné dans le sens vertical.

4. Liaison par rivetage borgne selon une des revendications 1 à 3, caractérisée en ce que deux nervures (4, 4') parallèles sont disposées symétriquement par rapport au trou (2) de rivetage.

5. Liaison par rivetage borgne selon une des revendications 1 à 4, caractérisée en ce que la distance au pied ou au fond entre les côtés (6, 6') intérieurs des nervures (4, 4') représente de 1,1 à 1,2 fois le diamètre du trou (2) de rivetage.

Fig.1

Fig.2

Fig. 3

Fig. 4